# EUROPÄISCHE PATENTSCHRIFT

(11) **EP 2 321 110 B1**
(45) Veröffentlichungstag und Bekanntmachung des Hinweises auf die Patenterteilung: **05.08.2015**
(21) Anmeldenummer: 09775894.0
(22) Anmeldetag: 18.06.2009
(51) Int. Cl.: B29C 49/54, B29C 49/06, B29C 49/36

(54) **VERFAHREN UND VORRICHTUNG ZUR BLASFORMUNG VON BEHÄLTERN**
METHOD AND APPARATUS FOR BLOW MOLDING RECEPTACLES
PROCÉDÉ ET DISPOSITIF DE MOULAGE PAR SOUFFLAGE DE CONTENANTS

(30) Priorität: 05.08.2008 DE 102008038781
(43) Veröffentlichungstag der Anmeldung: 18.05.2011
(73) Patentinhaber: KHS Corpoplast GmbH, 22145 Hamburg (DE)
(72) Erfinder: HAESENDONCKX, Frank, 22395 Hamburg (DE); HAUBENSCHILD, Jens-Uwe, 22397 Hamburg (DE); AMARIGLIO, Stefan, 22941 Bargteheide (DE); BALKAU, Karl-Heinz, 22113 Oststeinbek (DE)
(74) Vertreter: Hausfeld, Norbert
(86) Internationale Anmeldenummer: PCT/DE2009/000851
(87) Internationale Veröffentlichungsnummer: WO 2010/015219

(56) Entgegenhaltungen:
- EP-A1- 0 346 518
- EP-A1- 1 688 233
- WO-A1-2004/085133
- DE-C1- 3 721 690
- JP-A- 61 043 535
- JP-A- 2000 246 790

## Beschreibung

Die Erfindung betrifft ein Verfahren zur Blasformung von Behältern, bei dem ein Vorformling nach einer thermischen Konditionierung innerhalb einer Blasform durch Blasdruckeinwirkung in den Behälter umgeformt wird, sowie bei dem die Blasform von einem Träger einer Blasstation gehaltert wird, sowie bei dem im Bereich der Blasform mindestens ein Formelement in einem geschlossenen Zustand der Blasstation und nach einem Beginn des Blasvorganges direkt in einen von der Blasform umschlossenen Innenraum hinein positioniert wird, so daß eine aus dem Vorformling entwickelte Behälterblase verformt wird.

Die Erfindung betrifft darüber hinaus eine Vorrichtung zur Blasformung von Behältern, die mindestens eine Blasstation mit einer Blasform aufweist, sowie bei der die Blasform von einem Träger einer Blasstation gehaltert ist, sowie bei der im Bereich der Blasform mindestens ein in einem geschlossenen Zustand der Blasstation in einen Innenraum der Blasform hineinpositionierbares Formelement angeordnet ist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Gemäß dem Stand der Technik ist es bekannt, die Anschlußelemente sowohl pneumatisch als auch mechanisch unter Verwendung von Kurvensteuerungen zu positionieren. Kurvensteuerungen haben sich insbesondere bei Blasmaschinen mit rotierenden Blasrädern bewährt, da hier in Abhängigkeit von einer Rotationsbewegung des Blasrades die jeweiligen Positionierungen von der Kurvensteuerung vorgegeben werden können. Die Verwendung derartiger Kurvensteuerungen vermeidet einen zusätzlichen Druckluftverbrauch.

Typischerweise werden im Bereich der Blasstationen die verwendeten Blasformen von Formträgern gehaltert. Die Blasformen sind in der Regel in zwei seitliche Blasformhälften sowie eine Bodenform unterteilt. Die Formträger werden typischerweise mechanisch miteinander verriegelt oder mechanisch gegeneinander verspannt. Bei einer Umformung der Vorformlinge in die Behälter als Folge einer Blasdruckeinwirkung ist dafür zu sorgen, daß ein Entstehen von Formspalten, die sich auf dem Behälter aufprägen würden, verhindert werden.

Bekannt ist es deshalb, mindestens eine der Blasformhälften pneumatisch gegenüber dem zugeordneten Formträger derart zu verspannen, daß das Entstehen von Formspalten verhindert werden kann. Dies kann beispielsweise dadurch erfolgen, daß der in die Blasstation eingeleitete Blasdruck gleichzeitig auch einer pneumatischen Verspannungseinrichtung zugeführt wird und hierdurch mit einem steigenden Innendruck im zu blasenden Behälter und somit auch in der Blasform auch eine steigende Zuhaltekraft erzeugt wird.

Typischerweise sind die pneumatischen Verspanneinrichtungen, die im Bereich der Blasstation angeordnet sind, über Anschlußschläuche mit zugeordneten Steuerventilen verbunden. Nach einer erfolgten Behälterherstellung und vor einem Öffnen der Blasform wird sowohl der Innendruck aus dem geblasenen Behälter als auch der Druck aus der pneumatischen Spanneinrichtung abgelassen. Typischerweise erfolgt dies unter Verwendung von Schalldämpfern, um entstehende Ausströmgeräusche zu dämpfen.

Die blastechnische Herstellung von Behältern mit einer im wesentlichen rotationssymmetrischen und zylinderähnlichen Kontur erweist sich in der Regel als unproblematisch. Je stärker der herzustellende Behälter von einer derartigen Kontur abweicht, um so höher werden die Anforderungen an die Optimierung der verfahrenstechnischen Parameter. Ein besonderes Problem bereitet die Bereitstellung von Behältern mit Griffen oder Griffprofilen. Eine derartige Gestaltung ist insbesondere bei größeren Behältern erwünscht. Als größere Behälter werden hierbei Behälter mit einem Volumen in einem Bereich von 2 bis 6 Litern verstanden.

Gemäß dem Stand der Technik ist es bereits bekannt, den fertig geblasenen Behälter nachträglich mit separaten Griffteilen auszustatten oder Griffteile als Einlegeelemente in die Blasform einzusetzen und durch eine geeignete Blaskontur zu fixieren. Ebenfalls ist es bekannt, den Behälter durch eine geeignete Wahl der Innenkontur der Blasform mit Griffmulden zu versehen. Die gemäß der bislang bekannten Technologie herzustellenden Griffmulden ermöglichen es einem Benutzer aber nicht, schwerere Behälter ausreichend sicher zu greifen.

In der WO 2004/085 133 A1, die ein Verfahren gemäß dem Oberbegriff des Anspruchs 1 und eine Vorrichtung gemäß dem Oberbegriff des Anspuchs 10 offenbart, wird die Herstellung von Behältern mit Griffmulden beschrieben, wobei zur Erzeugung der Griffmulden verschiebliche Stößel in der Blasform angeordnet sind.

In der EP 0 346 518 A1 wird eine ähnliche Anordnung beschrieben, bei der eine Positionierung der Formelemente unter Verwendung von pneumatischen Zylindern erfolgt, die in einer Bewegungsrichtung hinter den Formelementen angeordnet sind.

In der JP 61 043 535 A wird ebenfalls in allgemeiner Art und Weise die Verwendung von Formelementen zur Erzeugung von Griffmulden beschrieben.

Aus der JP 2002/46 790 A ist die Positionierung entsprechender Formelemente unter Verwendung von Keilen bekannt, die in einer vertikalen Richtung verschieblich angeordnet sind.

Aufgabe der vorliegenden Erfindung ist es, ein Verfahren der einleitend genannten Art derart zu verbessern, daß die Herstellung von Behältern mit Griffmulden unterstützt wird.

Diese Aufgabe wird erfindungsgemäß dadurch gelöst, daß der pneumatische Druck für das Stellelement von einem Druck zur Verspannung von Formhälften der Blasform abgeleitet wird, daß das Formelement von einer hebelartigen Betätigungseinrichtung positioniert wird und daß die Betätigungseinrichtung relativ zu einer Schwenkachse vom Stellelement verschwenkt wird.

Weitere Aufgabe der vorliegenden Erfindung ist es, eine Vorrichtung der einleitend genannten Art derart zu konstruieren, daß die Herstellung von Behältern mit Griffmulden unterstützt wird.

Diese Aufgabe wird erfindungsgemäß dadurch gelöst, daß eine Druckversorgung des Stellelementes an eine Druckversorgung für eine pneumatische Formverspannung angeschlossen ist, daß eine Betätigungseinrichtung für das Formelement hebelartig ausgebildet ist und daß die Betätigungseinrichtung um eine Schwenkachse herum drehbeweglich angeordnet ist.

Das positionierbare Formelement ermöglicht es, den in den Behälter umzuformenden Vorformling zunächst in üblicher Weise zu recken und anschließend zumindest teilweise aufzublasen. Insbesondere ist daran gedacht, den Vorformling zumindest im Bereich der Seitenwandungen des herzustellenden Behälters vor einer Positionierung des Formelement zur Beaufschlagung der Behälterblase zumindest bereits soweit zu expandieren, daß die Behälterblase sich an die Seitenwand der Blasform anlegt bzw. nicht mehr weit von dieser entfernt ist. In diesem Zustand, in dem die Querexpansion der Behälterblase weitgehend abgeschlossen ist, erfolgt dann das Positionieren des Blasformsegmentes in Richtung auf den Innenraum der Blasform. Das Material der Behälterblase wird hierdurch in Richtung auf den Innenraum der Behälterblase verformt und bildet eine oder mehrere Griffmulden aus. Durch diese Verformung der Behälterblase ist es möglich, Konturen für die Griffmulde zu generieren, die durch einen reinen Blasvorgang nicht herstellbar wären.

Ein sicheres manuelles Ergreifen eines befüllten Behälters wird dadurch unterstützt, daß das Formelement im wesentlichen quer zur Formlängsachse positioniert wird.

Gemäß einer bevorzugten Ausführungsform ist vorgesehen, daß ein Behälter mit einer in einer horizontalen Ebene im wesentlichen ovalen Querschnittfläche blasgeformt wird.

Eine nochmals verbesserte Griffsicherheit läßt sich dadurch erreichen, daß der Behälter mit Griffmulden versehen wird.

Eine angenehme Handhaltung bei einem Ergreifen des Behälters wird dadurch unterstützt, daß die Griffmulden im Bereich einander im wesentlichen gegenüberliegender Längsseiten des Behälters geformt werden.

Ein manuelles Tragen eines befüllten Behälters wird dadurch erleichtert, daß die Griffmulde in einer einem Mündungsabschnitt zugewandten oberen Hälfte des Behälters geformt wird.

Eine einfache Verfahrensdurchführung bei der Behälterherstellung wird dadurch unterstützt, daß das Formelement unter Verwendung eines pneumatischen Stellelementes positioniert wird.

Eine vorteilhafte Materialverteilung im geblasenen Behälter kann dadurch erreicht werden, daß das Formelement nach einem Abschluß einer Längsreckung des Vorformlings in den Innenraum der Blasform hinein positioniert wird.

Die Erzeugung von Hinterschnitten im Bereich der Griffmulde wird dadurch erleichtert, daß das Formelement nach einem Abschluß eines Vorblasens des Vorformlings in den Innenraum der Blasform hinein positioniert wird.

Eine vereinfachte maschinenbauliche Gestaltung einer Vorrichtung zur Behälterherstellung wird dadurch unterstützt, daß der pneumatische Druck für das Stellelement von einem Druck zur Verspannung von Formhälften der Blasform abgeleitet wird.

Ein einfacher mechanischer Grundaufbau wird dadurch erreicht, daß das Formelement von einer hebelartigen Betätigungseinrichtung positioniert wird.

Kurze Stellwege und konstruktiv vorgebbare Hebelkräfte werden dadurch erreicht, daß die Betätigungseinrichtung relativ zu einer Schwenkachse vom Stellelement verschwenkt wird.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: einen Längsschnitt durch eine Blasform mit eingesetztem Vorformling sowie zwei Schiebern zur Herstellung von Griffmulden, wobei eine Betätigungseinrichtung für den ersten Schieber in einer Grundposition und eine Betätigungseinrichtung für den zweiten Schieber in einer Arbeitsposition dargestellt sind,
- Fig. 6: eine Ansicht gemäß Schnittlinie VI-VI in Fig. 5,
- Fig. 7: einen Querschnitt gemäß Schnittlinie VII-VII in Fig. 6,
- Fig. 8: eine schematische Darstellung einer Blasformhälfte sowie der Betätigungseinrichtung für einen Schieber einer nicht dargestellten zweiten Blasformhälfte und
- Fig. 9: die Anordnung gemäß Fig. 8 aus einer anderen Blickrichtung.

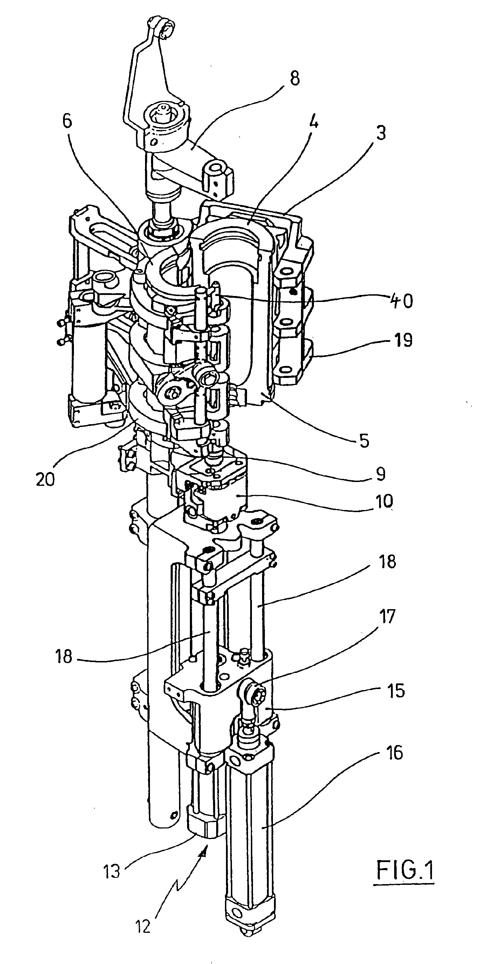

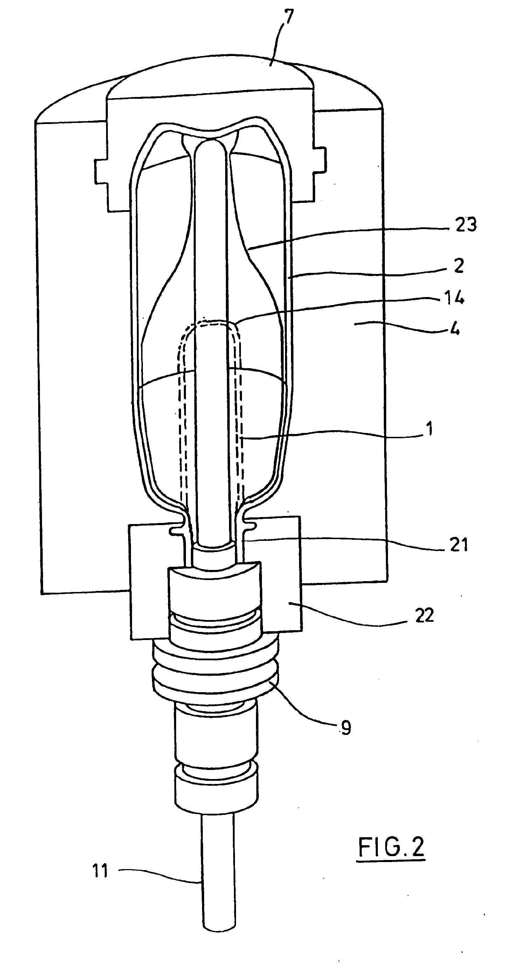

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

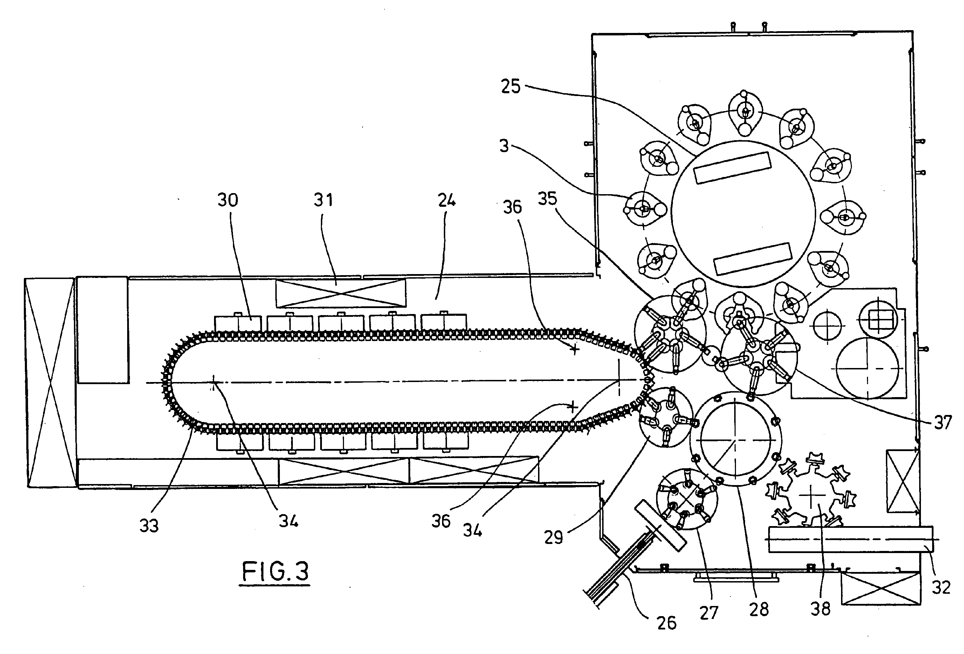

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

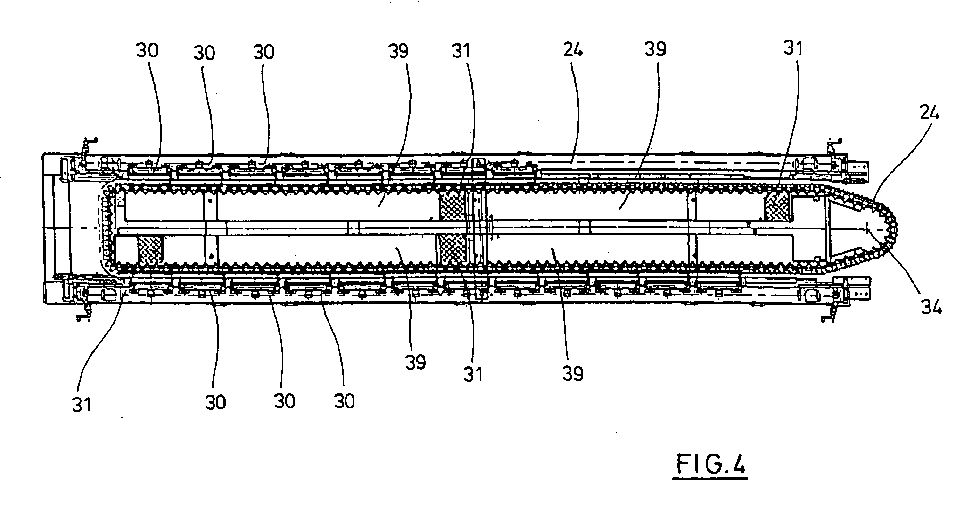

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

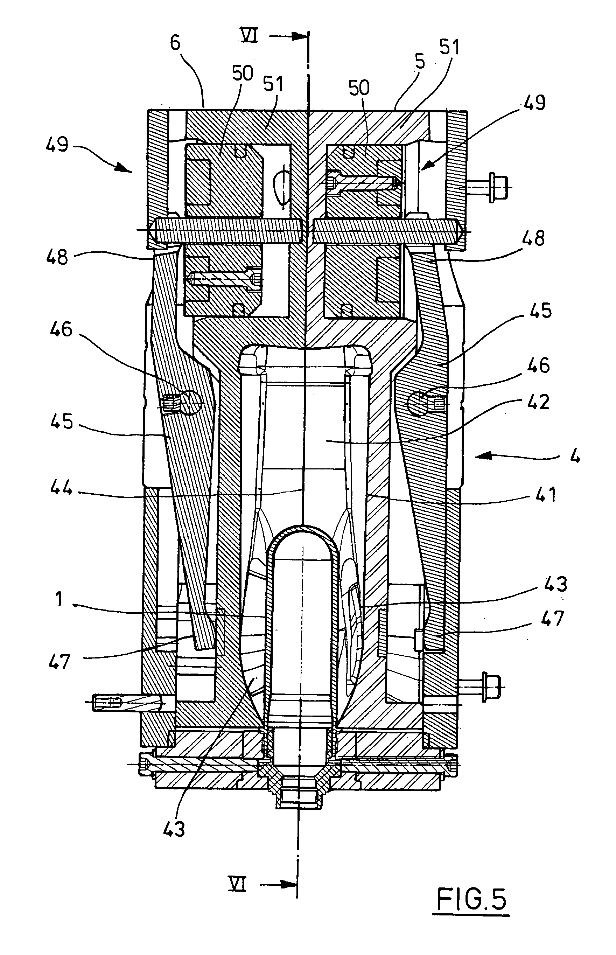

Fig. 5 zeigt einen Längsschnitt durch die Formhälften (5, 6) der Blasform (4). In die Blasform (4) ist ein Vorformling (1) eingesetzt. Die Blasform (4) umschließt mit einer Formkontur (41) eine Kavität (42), die zur Formgebung für den nicht dargestellten Behälter (2) vorgesehen ist. Beim dargestellten Ausführungsbeispiel ist jede der Formhälften (5, 6) mit einem Formelement (43) versehen, das mit einer Bewegungskomponente quer zu einer Formlängsachse (44) positionierbar angeordnet ist. Insbesondere ist daran gedacht, das Formelement (43) in einem Grundzustand soweit in die zugeordnete Formhälfte (5, 6) hinein zu verfahren, daß ein allenfalls geringes Vorstehen in die Kavität (42) hinein erfolgt.

Zur Positionierung des Formelementes (43) ist eine Betätigungseinrichtung (45) vorgesehen, die beim dargestellten Ausführungsbeispiel als ein Hebel ausgeführt ist, der drehbar um eine Schwenkachse (46) herum angeordnet ist. Mit einem Betätigungsende (47) wirkt der Hebel hierbei auf das Formelement (43) ein. Mit einem dem Betätigungsende (47) abgewandt angeordneten Positionierende (48) ist der Hebel mit einem Stellelement (49) verbunden, das beim dargestellten Ausführungsbeispiel als ein Kolben (50) ausgebildet ist, der in einem Zylinder (51) geführt ist. Typischerweise ist der Kolben (50) pneumatisch betätigt.

Gemäß dem rechten Zeichnungsteil von Fig. 5 befindet sich die Betätigungseinrichtung (45) in ihrer Grundposition und der Kolben (50) ist eingefahren. Gemäß dem in Fig. 5 im linken Zeichnungsteil dargestellten Betriebszustand ist der Kolben (50) ausgefahren und hierdurch ist die Betätigungseinrichtung (45) derart verschwenkt, daß das zugeordnete Formelement (43) in die Kavität (42) hineinpositioniert wurde. Die entsprechenden Positionsdarstellungen in Fig. 5 erfolgen zur Veranschaulichung des Funktionsprinzips, bei einer üblichen Funktionsweise werden beide Formelemente (43) gleichzeitig positioniert.

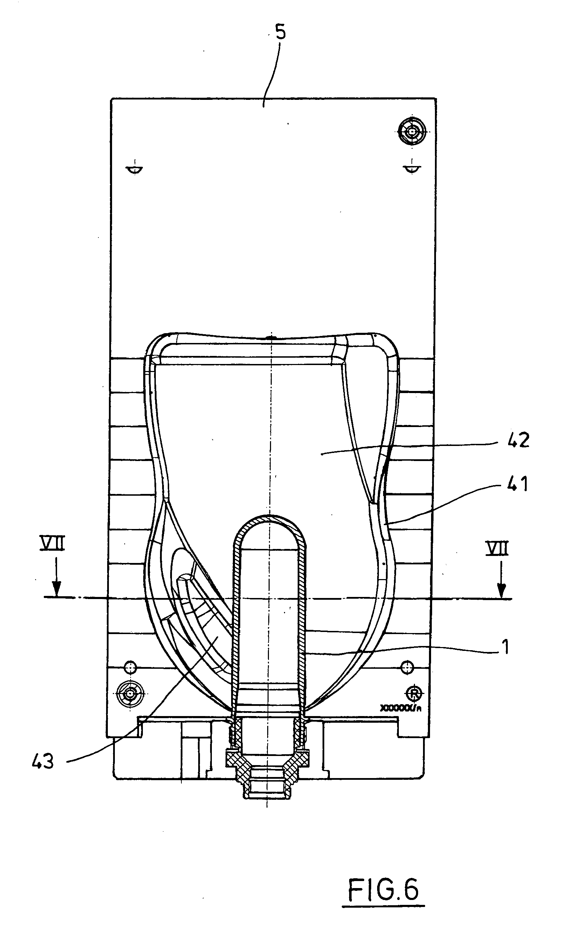

Fig. 6 zeigt entsprechend Schnittlinie VI-VI in Fig. 5 eine Seitenansicht der Formhälfte (5) und somit einen Blick in die Formkontur der Formhälfte (5) hinein. Durch eine Zusammenschau von Fig. 5 und Fig. 6 ist insbesondere zu erkennen, daß die Formkontur (41) gemäß dem dargestellten Ausführungsbeispiel zur Herstellung von ovalen Behältern (2) vorgesehen ist, die somit von zwei längeren und zwei kürzeren Seiten begrenzt sind. Die unter Verwendung der Formelemente (43) im Bereich des geblasenen Behälters (2) herzustellenden Griffmulden sind vorzugsweise im Bereich der Längsseiten dieses ovalen Behälters (2) angeordnet. Ebenfalls erfolgt vorzugsweise eine Anordnung in Richtung einer Behälterlängsachse in einer oberen Hälfte des Behälters und somit in einem dem Mündungsabschnitt (21) zugewandten Bereich.

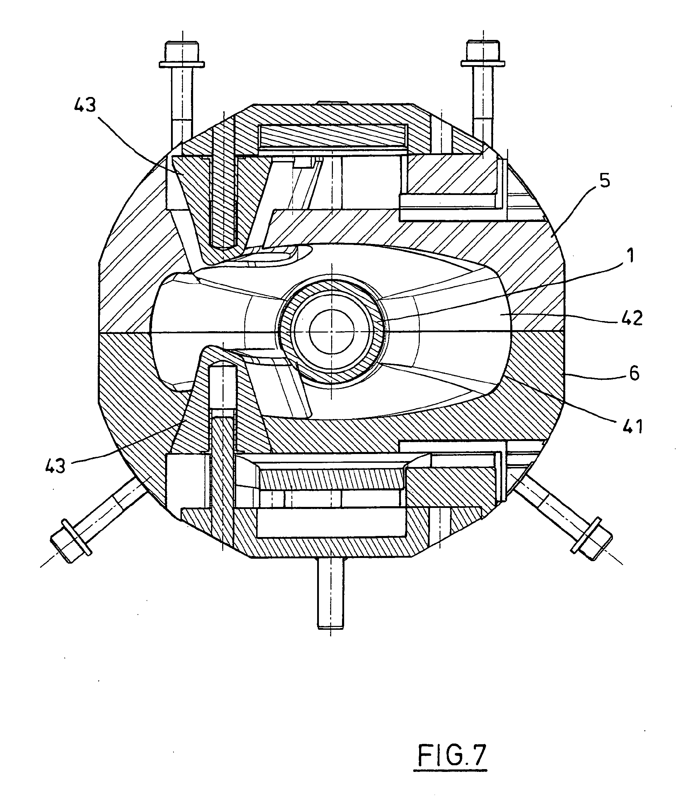

Fig. 7 zeigt einen Querschnitt gemäß Schnittlinie VII-VII in Fig. 6 und veranschaulicht nochmals die Zuordnung der Formkontur (41) zur Anordnung der Formelemente (43).

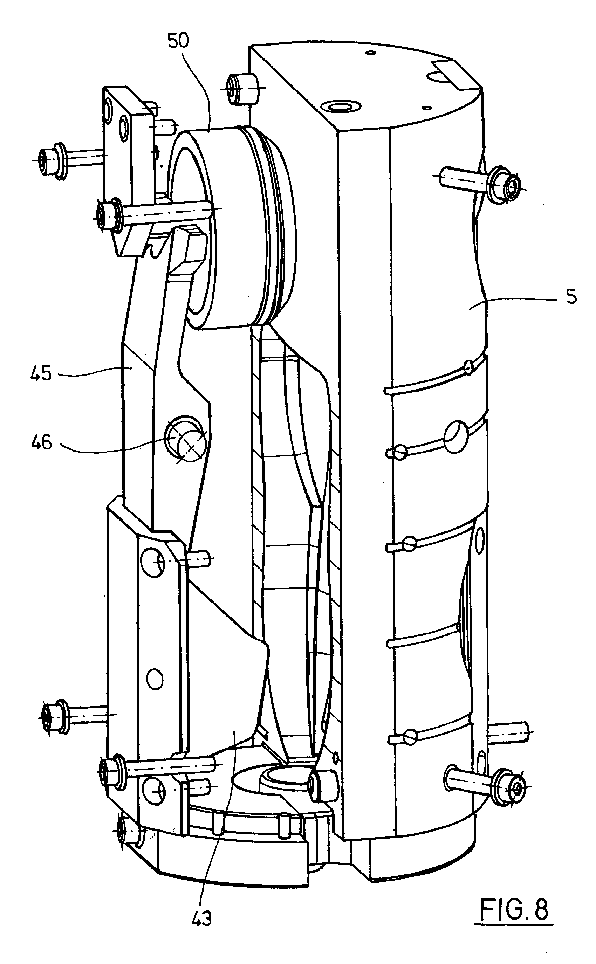

Die perspektivische Darstellung in Fig. 8 mit entfernter Formhälfte (6) veranschaulicht nochmals die hebelartige Ausbildung der Betätigungseinrichtung (45), die Anordnung der Schwenkachse (46) und die Konturvorgabe für das Formelement (43).

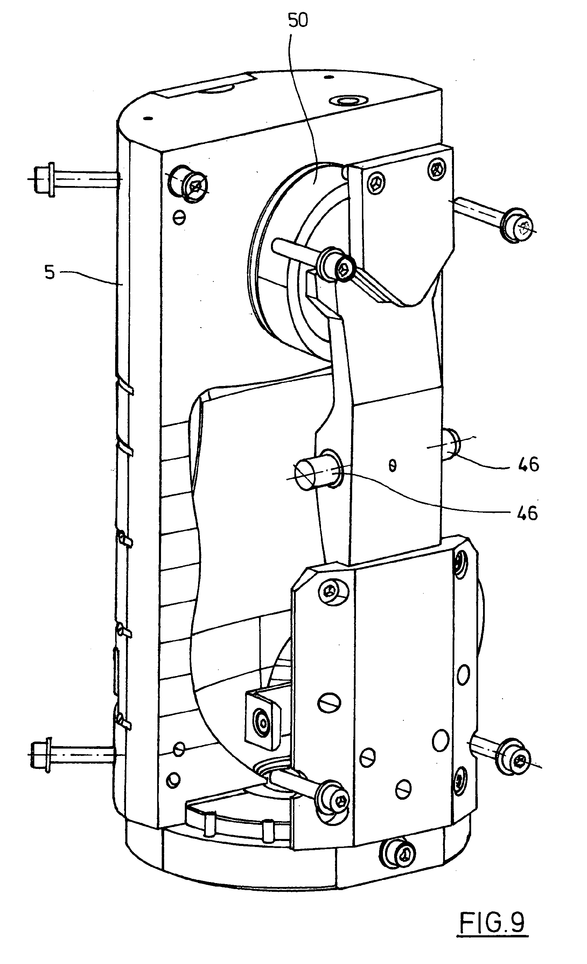

Die geometrische Zuordnung der einzelnen Bauelemente wird nochmals in Fig. 9 veranschaulicht. Zu erkennen ist, daß zur Bereitstellung der Schwenkachse (46) auf beiden einander gegenüberliegenden Seiten der Betätigungseinrichtung (45) zapfenartige Vorsprünge angeordnet sind.

Durch die erfindungsgemäßen Formelemente (43) wird das aus dem Bereich des Extrusionsblasens bekannte Fertigungsprinzip der Verwendung von Formschiebern auf die Herstellung von biaxial orientierten Behältern (2) übertragen. Beim Extrusionsblasen werden sehr weiche und verformbare extrudierte Schläuche durch Einwirkung eines Blasgases quer expandiert. Auch im quer expandierten Zustand besitzt bei derartigen Verfahren das Material eine äußerst weiche und nachgiebige Konsistenz, so daß vielfältige geometrische Gestaltungen realisiert und insbesondere auch durchgehende Grifföffnungen hergestellt werden können. Der Nachteil derartiger Behälter ist allerdings das vergleichsweise große Gewicht. Bei Behältern aus biaxial orientierten Materialien können wesentlich geringere Behältergewichte realisiert werden, die hohe Materialfestigkeit begrenzt jedoch den prozeßtechnischen Freiraum bei der Realisierung der Behältergeometrie. Durch die Verwendung der erfindungsgemäßen positionierbaren Formelemente lassen sich die jeweiligen Vorteile der beiden Herstellungsverfahren miteinander kombinieren.

Zur Realisierung einer pneumatischen Betätigung des Stellelementes (49) ist es möglich, bei der Druckgasversorgung ein elektrisch steuerbares Betätigungselement, beispielsweise ein Magnetventil, zu verwenden. Gemäß einer Ausführungsvariante ist ebenfalls daran gedacht, dem Stellelement (49) das in den Vorformling (1) einleitete Blasgas zuzuführen und hierdurch separate Steuerleitungen zu vermeiden. Die Zuführung kann hierbei direkt oder über ein steuerbares Stellelement erfolgen.

Bei den Ausführungsformen, bei denen eine pneumatische Formverspannung verwendet wird, ist es ebenfalls möglich, die Druckgasversorgung des Stellelementes (49) von der Druckgasversorgung der pneumatischen Formverspannung abzuleiten. Auch hier kann die Zuführung entweder direkt oder über Zwischenschaltung eines Steuerelementes erfolgen.

Gemäß der in den Ausführungsbeispielen dargestellten Hebelgeometrie befindet sich die Schwenkachse (46) im wesentlichen in einem mittleren Bereich der Betätigungseinrichtung (45). Insbesondere ist daran gedacht, keine exakt mittige Anordnung zu verwenden, sondern die Schwenkachse (46) relativ zum Betätigungsende (47) mit einem größeren Abstand als relativ zum Positionierende (48) anzuordnen.

Ebenfalls ist daran gedacht, das Formelement (43) lediglich hinsichtlich der in die Kavität (42) hineinverschobenen Stellung aktiv zu positionieren und eine Rückstellung in die Grundposition unter Verwendung einer Feder vorzunehmen. Bei einer derartigen Ausbildung braucht die Anordnung aus dem Kolben (50) und dem Zylinder (51) lediglich zur Kraftausübung in einer Richtung konstruiert zu werden.

## Patentansprüche

1. Verfahren zur Blasformung von Behältern (2) , bei dem ein Vorformling (1) nach einer thermischen Konditionierung innerhalb einer Blasform (4) durch Blasdruckeinwirkung in den Behälter (2)umgeformt wird, sowie bei dem die Blasform (4) von einem Träger (19, 20) einer Blasstation (3) gehaltert wird, sowie bei dem im Bereich der Blasform (4) mindestens ein Formelement (43) in einem geschlossenen Zustand der Blasstation (3) und nach einem Beginn des Blasvorganges direkt in einen von der Blasform (4) umschlossenen Innenraum hinein positioniert wird, so daß eine aus dem Vorformling (1) entwickelte Behälterblase (23) verformt wird, **dadurch gekennzeichnet, daß** der pneumatische Druck für das Stellelement (49) von einem Druck zur Verspannung von Formhälften (5, 6) der Blasform (4) abgeleitet wird, daß das Formelement (49) von einer hebelartigen Betätigungseinrichtung (45) positioniert wird und daß die Betätigungseinrichtung (45) relativ zu einer Schwenkachse (46) vom Stellelement (49) verschwenkt wird.

2. Verfahren nach Anspruch 1, **dadurch gekennzeichnet, daß** das Formelement (43) im wesentlichen quer zur Formlängsachse (44) positioniert wird.

3. Verfahren nach Anspruch 1 oder 2, **dadurch gekennzeichnet, daß** ein Behälter (2) mit einer in einer horizontalen Ebene im wesentlichen ovalen Querschnittfläche blasgeformt wird.

4. Verfahren nach einem der Ansprüche 1 bis 3, **dadurch gekennzeichnet, daß** der Behälter (2) mit Griffmulden versehen wird.

5. Verfahren nach einem der Ansprüche 1 bis 4, **dadurch gekennzeichnet, daß** die Griffmulden im Bereich einander im wesentlichen gegenüberliegender Längsseiten des Behälters (4) geformt werden.

6. Verfahren nach einem der Ansprüche 1 bis 5, **dadurch gekennzeichnet, daß** die Griffmulde in einer einem Mündungsabschnitt (21) zugewandten oberen Hälfte des Behälters (2) geformt wird.

7. Verfahren nach einem der Ansprüche 1 bis 6, **dadurch gekennzeichnet, daß** das Formelement (43) unter Verwendung eines pneumatischen Stellelementes (49) positioniert wird.

8. Verfahren nach einem der Ansprüche 1 bis 7, **dadurch gekennzeichnet, daß** das Formelement (43) nach einem Abschluß einer Längsreckung des Vorformlings (1) in den Innenraum der Blasform (4) hinein positioniert wird.

9. Verfahren nach einem der Ansprüche 1 bis 7, **dadurch gekennzeichnet, daß** das Formelement (43) nach einem Abschluß eines Vorblasens des Vorformlings (1) in den Innenraum der Blasform (4) hinein positioniert wird.

10. Vorrichtung zur Blasformung von Behältern (1), die mindestens eine Blasstation (3) mit einer Blasform aufweist, sowie bei der die Blasform (4) von einem Träger (19, 20) der Blasstation (3) gehaltert ist, sowie bei der im Bereich der Blasform (4) mindestens ein in einem geschlossenen Zustand der Blasstation (3) in einen Innenraum der Blasform (4) hineinpositionierbares Formelement (43) angeordnet ist, **dadurch gekennzeichnet, daß** eine Druckversorgung des Stellelementes (49) an eine Druckversorgung für eine pneumatische Formverspannung angeschlossen ist; daß eine Betätigungseinrichtung (45) für das Formelement (43) hebelartig ausgebildet ist und daß die Betätigungseinrichtung (45) um eine Schwenkachse (46) herum drehbeweglich angeordnet ist.

11. Vorrichtung nach Anspruch 10, **dadurch gekennzeichnet, daß** das Formelement (43) im wesentlichen quer zu einer Formlängsachse (44) positionierbar angeordnet ist.

12. Vorrichtung nach Anspruch 10 oder 11, **dadurch gekennzeichnet, daß** die Blasform (4) eine Formkontur (41) zur Ausbildung eines Behälters (2) mit im wesentlichen ovaler Querschnittfläche aufweist.

13. Vorrichtung nach einem der Ansprüche 10 bis 12, **dadurch gekennzeichnet, daß** die Blasform (4) mit zwei positionierbaren Formelementen (43) ausgestattet ist.

14. Vorrichtung nach einem der Ansprüche 10 bis 13, **dadurch gekennzeichnet, daß** die Formelemente (43) im Bereich von Längsseiten der Blasform (4) angeordnet sind.

15. Vorrichtung nach einem der Ansprüche 10 bis 14, **dadurch gekennzeichnet, daß** das Formelement (43) in einem einer Bodenform abgewandten Bereich der Blasform (4) angeordnet ist.

16. Vorrichtung nach einem der Ansprüche 13 bis 15, **dadurch gekennzeichnet, daß** das Formelement (43) mit einem pneumatisch betätigten Stellelement (49) gekoppelt ist.

## Claims

1. Method for the blow moulding of containers (2), in which a preform (1) is moulded, after a thermal conditioning, into the container (2) inside a blow mould (4) by blow pressure action, and in which the blow mould (4) is bracketed by a support (19, 20) of a blow station (3), and in which at least one mould element (43), in a closed state of the blow station (3) and after a start of the blowing process, is being positioned directly in an internal space that is encased by the blow mould (4) such that a container bubble (23) formed from the preform (1) is being moulded, **characterised in that** the pneumatic pressure for the actuator element (49) is derived from a pressure for the tensioning of mould halves (5, 6) of the blow mould (4), **in that** the mould element (49) is positioned by a lever-like actuation facility (45), and **in that** the actuation facility (45) is swivelled with respect to a swivel axis (46) by the actuator element (49).

2. Method according to claim 1, **characterised in that** the mould element (43) is being positioned essentially transverse to the longitudinal axis (44) of the mould.

3. Method according to claim 1 or 2, **characterised in that** a container (2) having a cross-sectional surface that is essentially oval in a horizontal plane is blow moulded.

4. Method according to any one of the claims 1 to 3, **characterised in that** the container (2) is provided with recessed grips.

5. Method according to any one of the claims 1 to 4, **characterised in that** the recessed grips are moulded in the region of longitudinal sides of the container (4) that are situated essentially opposite from each other.

6. Method according to any one of the claims 1 to 5, **characterised in that** the recessed grip is moulded in an upper half of the container (2) that faces a merging section (21).

7. Method according to any one of the claims 1 to 6, **characterised in that** the mould element (43) is being positioned by means of a pneumatic actuator element (49).

8. Method according to any one of the claims 1 to 7, **characterised in that** the mould element (43) is being positioned in the internal space of the blow mould (4) after completion of a longitudinal stretching of the preform (1).

9. Method according to any one of the claims 1 to 7, **characterised in that** the mould element (43) is being positioned in the internal space of the blow mould (4) after completion of a pre-moulding of the preform (1).

10. Device for the blow moulding of containers (1) that comprises at least one blow station (3) having a blow mould, and in which the blow mould (4) is bracketed by a support (19, 20) of the blow station (3), and in which at least one mould element (43), which can be positioned in an internal space of the blow mould (4) in a closed state of the blow station (3), is arranged in the region of the blow mould (4), **characterised in that** a pressure supply of the actuator element (49) is connected to a pressure supply for a pneumatic mould tensioning; **in that** an actuation facility (45) for the mould element (43) is provided to be lever-like; and **in that** the actuation facility (45) is arranged appropriately such that it can swivel about a swivel axis (46).

11. Device according to claim 10, **characterised in that** the mould element (43) is arranged such as to be essentially transverse with respect to a longitudinal axis (44) of the mould.

12. Device according to claim 10 or 11, **characterised in that** the blow mould (4) comprises a mould contour (41) for forming a container (2) having an essentially oval cross-sectional surface.

13. Device according to any one of the claims 10 to 12, **characterised in that** the blow mould (4) is equipped with two mould elements (43) that can be positioned.

14. Device according to any one of the claims 10 to 13, **characterised in that** the mould elements (43) are arranged in the region of longitudinal sides of the blow mould (4).

15. Device according to any one of the claims 10 to 14, **characterised in that** the mould element (43) is arranged in a region of the blow mould (4) that faces away from a bottom mould.

16. Device according to any one of the claims 13 to 15, **characterised in that** the mould element (43) is coupled to a pneumatically-actuated actuator element (49).

## Revendications

1. Procédé de moulage par soufflage de récipients (2) dans le cadre duquel une préforme (1), après un conditionnement thermique à l'intérieur d'un moule de soufflage (4), est transformée en récipient (2) sous l'action d'une pression de soufflage, et dans le cadre duquel le moule de soufflage (4) est maintenu par un support (19, 20) d'une station de soufflage (3), et dans le cadre duquel, au niveau du moule de soufflage (4), la station de soufflage (3) étant en état fermé et le processus de soufflage ayant commencé, au moins un élément de moulage (43) est directement positionné dans un espace intérieur délimité par le moule de soufflage (4) de façon à déformer une bulle (23) qui se développe à partir de la préforme (1) **caractérisé en ce que** la pression pneumatique destinée à l'élément de réglage (49) est dérivée d'une pression de serrage des demi-moules (5, 6) du moule de soufflage (4), et **en ce que** l'élément de moulage (49) est positionné par un dispositif d'actionnement (45) du type à levier et que le dispositif d'actionnement (45) est pivoté par rapport à un axe de pivotement (46) par l'élément de réglage (49).

2. Procédé selon la revendication 1, **caractérisé en ce que** l'élément de moulage (43) est essentiellement positionné transversalement par rapport à l'axe longitudinal (44) du moule.

3. Procédé selon la revendication 1 ou 2, **caractérisé en ce qu'**un récipient (2) est moulé par soufflage de façon à lui donner une section transversale horizontale essentiellement ovale.

4. Procédé selon l'une des revendications 1 à 3, **caractérisé en ce que** le récipient (2) est muni de concavités faisant office de poignée.

5. Procédé selon l'une des revendications 1 à 4, **caractérisé en ce que** les concavités faisant office de poignée sont formées dans des côtés longitudinaux du récipient (4) essentiellement opposés l'un à l'autre.

6. Procédé selon l'une des revendications 1 à 5, **caractérisé en ce que** la concavité faisant office de poignée est formée dans une moitié supérieure du récipient (2) faisant face à une section d'embouchure (21).

7. Procédé selon l'une des revendications 1 à 6, **caractérisé en ce que** l'élément de moulage (43) est positionné au moyen d'un élément de réglage (49) pneumatique.

8. Procédé selon l'une des revendications 1 à 7, **caractérisé en ce que**, après achèvement d'un étirage longitudinal de la préforme (1), l'élément de moulage (43) est positionné dans l'espace intérieur du moule de soufflage (4).

9. Procédé selon l'une des revendications 1 à 7, **caractérisé en ce que**, après achèvement d'un pré-soufflage de la préforme (1), l'élément de moulage (43) est positionné dans l'espace intérieur du moule de soufflage (4).

10. Dispositif de moulage par soufflage de récipients (1) présentant au moins une station de soufflage (3) avec un moule de soufflage maintenu par un support (19, 20) de la station de soufflage, et dans lequel est agencé au niveau du moule de soufflage (4) au moins un élément de moulage (43) qui, lorsque la station de soufflage (3) est en état fermé, peut être positionné dans un espace intérieur du moule de soufflage (4), **caractérisé en ce qu'**une alimentation en pression de l'élément de réglage (49) est branchée sur une alimentation en pression d'un serrage pneumatique du moule, qu'un dispositif d'actionnement (45) de l'élément de moulage (43) est du type à levier, et **en ce que** le dispositif d'actionnement (45) est agencé de façon à être mobile autour d'un axe de pivotement (46).

11. Dispositif selon la revendication 10, **caractérisé en ce que** l'élément de moulage (43) est essentiellement positionné transversalement par rapport à l'axe longitudinal (44) du moule.

12. Dispositif selon la revendication 10 ou 11, **caractérisé en ce que** le moule de soufflage (4) présente un contour de moulage (41) propre à former un récipient (2) de section transversale horizontale essentiellement ovale.

13. Dispositif selon l'une des revendications 10 à 12, **caractérisé en ce que** le moule de soufflage (4) est doté de deux élément de moulage (43) pouvant être positionnés.

14. Dispositif selon l'une des revendications 10 à 13, **caractérisé en ce que** les élément de moulage (43) sont agencés au niveau de côtés longitudinaux du moule de soufflage (4).

15. Dispositif selon l'une des revendications 10 à 14, **caractérisé en ce que** l'élément de moulage (43) est agencé dans une partie du moule de soufflage (4) opposée à la zone de moulage du fond du récipient.

16. Dispositif selon l'une des revendications 13 à 15, **caractérisé en ce que** l'élément de moulage (43) est couplé à un élément de réglage (49) actionné pneumatiquement.
